# EUROPEAN PATENT SPECIFICATION

(11) **EP 2 192 063 B1**
(45) Date of publication and mention of the grant of the patent: **25.04.2012**
(21) Application number: 09177339.0
(22) Date of filing: 27.11.2009
(51) Int. Cl.: B65G 47/91

(54) **A pick-up head provided with pick-up devices arranged side-by-side and at variable pitch**
Aufnahmekopf mit nebeneinander und in verstellbarem Abstand angeordneten Aufnahmevorrichtungen
Tête de lecture fournie avec des dispositifs de capteur agencés côte-à-côte et à un espacement variable

(30) Priority: 28.11.2008 IT TO20080886
(43) Date of publication of application: 02.06.2010
(73) Proprietor: OPM S.p.A., 12066 Monticello d'Alba (IT)
(72) Inventor: Giacobbe, Fulvio, 12050 Guarene (IT)
(74) Representative: Jorio, Paolo

(56) References cited:
- US-A- 6 068 317
- US-B1- 6 352 402

## Description

The present invention relates to a pick-up head provided with pick-up devices arranged side-by-side and at variable pitch, according to the preamble of claim 1.

Transfer machines are known to transfer products from a picking station to a storing station, comprising a robot and a pick-up head, which is moved by the robot between the two stations, and comprises a series of pick-up devices arranged side-by-side and activated to grip, hold and release the respective products. In the picking station, the products to be transferred are arranged in rows at a constant, predetermined distance, while the storing station normally has a series of containers in which the products are to be packaged at a different distance from that of the picking station.

The pick-up head comprises a horizontal guide, on which the pick-up devices are slidingly coupled. The pitch between the pick-up devices along the guide is reduced when transferring from the picking station to the storing station, so as to place the products at the distance required by the storing station.

In order to move the pick-up devices towards and away from each other along the guide, solutions are known in which the pick-up head comprises a flat plate defining a series of cams or tracks, which are engaged by follower elements held by the pick-up devices, respectively. The pick-up head further comprises an actuator, which moves the plate in a direction orthogonal to the guide, synchronously with the movement of the robot, to make the follower elements slide along the cams and therefore move the pick-up devices along the guide at predetermined speeds and to predetermined positions.

The above-described known solutions are not satisfactory because the linear reciprocating motion caused by the actuator continuously imbalances the centre of gravity of the pick-up head and tends to give rise to undesired vibrations, which are transferred to the robot during the transfer between the picking and storing stations. These drawbacks lead to vibrations and inaccuracies in controlling the pick-up head positioning, whereby they should be compensated by appropriately designing and/or dimensioning the robot motors and arms, with consequent additional dimensions and costs.

US6068317A discloses a device according to the preamble of claim 1. The device includes an elevating plate movable in up and down direction along a vertical guider, and a cam shaft rotatably mounted on the elevating plate. The cam shaft has a plurality of cam grooves formed in a radial direction in an outer circumferential surface, and is rotated by a driving mechanism. A plurality of pick-up members are movable in a horizontal direction along a horizontal guider and have respective top ends inserted in the cam grooves.

It is the object of the present invention to implement a pick-up head provided with pick-up devices arranged side-by-side at variable pitch, which allows to simply and cost-effectively solve the aforesaid problems.

According to the present invention, there is provided a pick-up head as defined in claim 1.

The invention will now be described with reference to the accompanying drawings which illustrate a non-limitative embodiment thereof, in which:
- figure 1 is a partial front view of a preferred embodiment of the pick-up head provided with pick-up devices arranged side-by-side and at variable pitch according to the present invention;

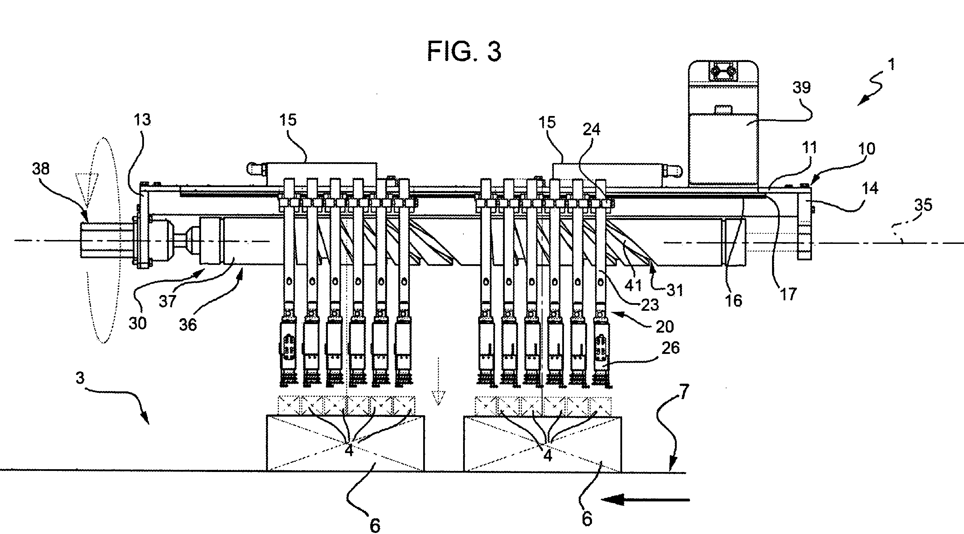

- figures 2 and 3 are similar to figure 1 and show the pick-up head when being moved towards a different operating position;

- figure 4 is a perspective view from the bottom, with parts exploded, of a detail of the pick-up head in figure 1; and
- figure 5 is a perspective view of a component of the pick-up head in figure 1.

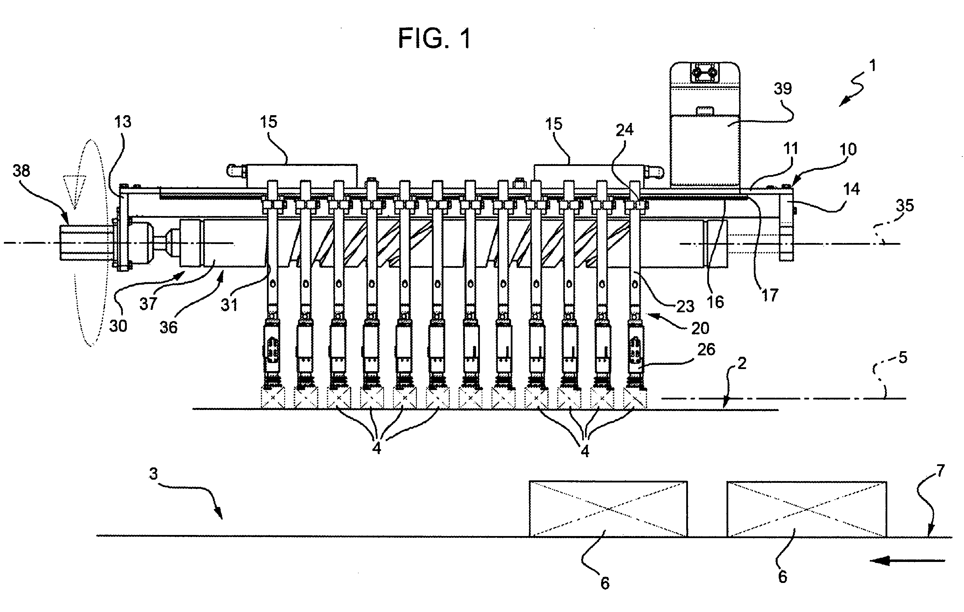

In figure 1, numeral 1 indicates as a whole a pick-up head (partially illustrated), which is moved by a robot (not shown) for transferring products 4 from a picking station 2 to a storing station 3. The products 4 to be transferred are arranged in station 2 in a row along a horizontal direction 5, in fixed positions and at a predetermined, constant reciprocal distance. Station 3, instead, houses a series of containers in which the products are to be packaged. Containers 6 are arranged in a row on a conveyor belt 7, which is parallel to the direction 5 and, in the particular described example, moves with a continuous motion, preferably at constant speed, also during the transfer motion of the pick-up head 1 towards the station 3 and when releasing the products 4 in the containers 6.

The pick-up head 1 comprises a support structure 10, which is fixed to the end of an arm of the robot in manner not shown and not described in detail. Structure 10 comprises: an upper horizontal plate 11 elongated parallelly to direction 5; and two vertical flanges 13, 14 fixed to the opposite axial ends of plate 11.

Plate 11 holds two pneumatic distributors 15 and a guide 16, which are arranged in fixed positions on the upper and lower faces of plate 11, respectively.

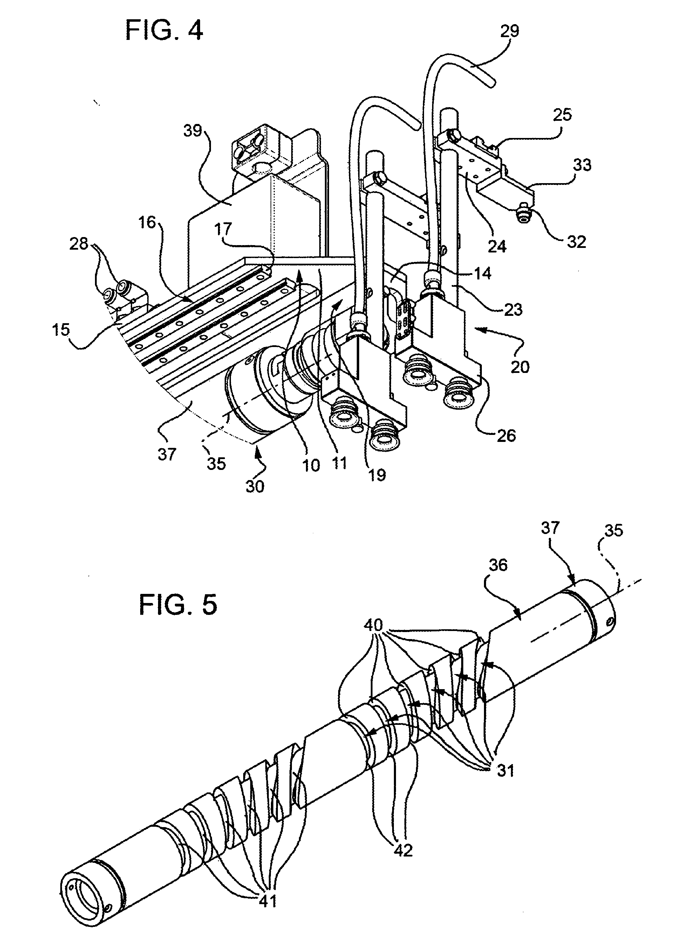

With reference to figure 4, guide 16 is horizontal and straight and extends parallelly to direction 5; and flange 14 is shaped so as to define a recess 19 in front of one end 17 of the guide 16, so as to leave the end 17 open, to be able to insert/remove the pick-up devices 20 on the guide 16.

The pick-up devices 20 are equal in number to the products 4 to be picked up each time, in particular they are divided into two groups of six, are also named "fingers", and comprise respective vertical rods 23 and respective supporting blocks 24. The blocks 24 are fastened to the upper ends of the rods 23 and hold respective slide shoes 25, which are arranged in fixed positions on the upper face of the blocks 24 and are slidingly coupled to the guide 16.

The pick-up devices 20 further comprise respective pick-up devices 26, which are coupled in fixed positions to the lower ends of the rods 23 and may be activated to grip, hold and release the respective products 4. In particular, the pick-up devices 26 are defined by suction systems, e.g. by pairs of suction caps which in use come in contact with the upper face of the products 4. Alternatively, the pick-up devices may be defined by a different suction system or by electrically or pneumatically operated grippers. In the particular example shown in figure 4, the suction caps 26 are connected to connectors 28 of the distributors 15 by means of respective flexible tubes 29. In turn, the distributors 15 connect the suction caps 26 to a pneumatic system (not shown) for generating vacuum so as to allow to create a vacuum in the area underneath the suction caps 26 when the products 4 need to be picked up. The products 4 are released in the station 3 by controlling respective solenoid valves of the distributors 15 so as to make such a vacuum cease or so as to generate a minor pneumatic pressure between the suction caps 26 and the upper face of the products 4.

As shown in figures from 1 to 3, the pick-up head 1 comprises a moving assembly 30 for moving the six pick-up devices 20 of each of the two groups along the guide 16 between an enlarged configuration, in which the pick-up devices 26 are arranged at a pitch equal to the distance between the products 4 to be picked up from the picking station, and a compacted configuration, in which the pick-up devices 26 are divided into the two groups and arranged at a pitch equal to the distance required by the places provided in the containers 6 of station 3.

For each pick-up device 20, the moving assembly 30 comprises a respective cam 31 and a respective follower element 32. As shown in figure 4, the follower elements 32 are defined by rollers, which idly rotate about respective vertical axes and are overhangingly held at the bottom by respective horizontal plates 33. The plates 33 are, in turn, fixed to the blocks 24 on the opposite side with respect to the rods 23. With reference to figure 5, the cams 31 are instead held by the structure 10 and according to the invention extend about an axis 35 parallel to the direction 5. In particular, cams 31 are held by the external cylindrical surface 36 of a drum 37 arranged under the plates 33 and behind the rods 23. Drum 37 is preferably obtained from a cylinder made of full material or a thick wall tube, and the cams 31 are defined by grooves or slots which are each engaged by a corresponding follower element 32.

With reference to figure 1, the moving assembly 30 further comprises an actuator 38, which rotates the cams 31, i.e. the drum 37, about the axis 35. The actuator 38 is preferably defined by a rotary electric motor, held by the plate 13 in a fixed position which is coaxial with the drum 37 along axis 35. The power supply reaches the motor 38 from an electric power supply unit 39 which is arranged in a fixed position of the upper face of the plate 11. Unit 39 transmits the controls emitted by a control unit of the robot (not shown) to the solenoid valves of distributors 15. In order to synchronize the operation of the pick-up devices 26, the movements of the robot and the rotation of cams 31, the drum 37 or motor 38 is provided with an encoder or other angular positioning sensor, which sends a signal indicating the rotation angle to the unit 39, which transmits it to the aforesaid control unit or directly to the control unit.

By virtue of the profile of cams 31, their rotation causes an axial movement of the follower elements 32 along the surface 36 and thus a sliding of the pick-up devices 20 along the guide 16 between the compacted and enlarged configurations, at predetermined speeds. According to the invention, each cam 31 is closed as a loop, i.e. is continuous over 360°, so as to axially move the follower elements 32 by rotating the cams 31, by means of the actuator 38, in a one-way rotation direction.

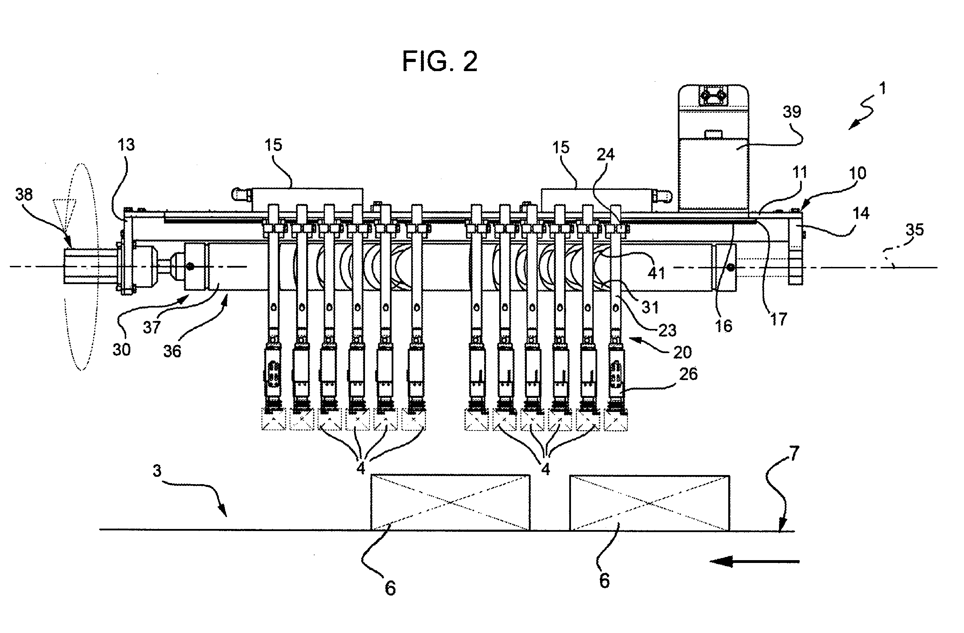

With reference to figure 2, the cams 31 comprise respective parallel portions 40, which extend along planes orthogonal to axis 35 so as to leave the pick-up devices 20 axially still while they pick up the products 4 from station 2. The portions 40 are followed by outward portions 41, the shape of which is designed so as to approach the pick-up devices 20 from the enlarged configuration to the compacted configuration, while making the set of pick-up devices 20 slide along the guide 16 in the feeding direction of belt 7. By virtue of such a sliding, all pick-up devices 20 undergo a side acceleration in the feeding direction of belt 7, in order to reach the feeding speed of belt 7. Once the pick-up devices 20 have been compacted into the two groups, the cams 31 comprise respective parallel portions 42, the shape of which allows firstly to end, if required, the step of giving a side acceleration to the set of pick-up devices 20 to reach the speed of the belt 7, and then allows to keep such a speed for a time sufficient to release the products 4 into the respective places in the containers 6 underneath. Thereby, the moving assembly 30 also serves a following function for storing the products 4 into containers 6 while the latter are moving.

In order to return to the original enlarged configuration defined by the portions 40 and take a new set of products 4 from station 2, the cams 31 comprise respective return portions, the shape of which is substantially symmetric to that of the portions 41, to move the pick-up devices 20 away while making the set of pick-up devices 20 slide in opposite direction to that of feeding of belt 7.

From the above, it is apparent that the moving assembly 30 allows to limit vibrations and increase accuracy of controlling the position of the pick-up 1 during the movement made by the robot. Indeed, on one hand, the pick-up devices 20 are moved while keeping the centre of gravity of the pick-up device 1 substantially unchanged by virtue of the arrangement of the cams 31 about axis 35. On the other hand, drum 37 transmits negligible dynamic actions to the structure 10 because reversions of rotation motion of drum 37 are not present.

By virtue of the solution with rotation of the cams 31, cams with profiles which provide particular movements to the pick-up devices 20 may be provided. For example, the possibility of making cams with profiles which add a degree of freedom could be included, thus making the pick-up devices 20 swing about a guide 16 defined by a rail having a circular transversal section.

Moreover, by virtue of the arrangement of the cams 31 on drum 37, the dimensions of the moving assembly 30 are relatively small. During the assembly on the pick-up head 1, drum 37 does not require to respect particular contrivances or tolerances, which are instead necessary to ensure sliding parallelism in traditional solutions with a flat plate in reciprocating motion.

By performing the compacting and side sliding motions at the same time by means of the portions 41 of the cams 31, progressive following of the containers 6 may be obtained, without excessively accelerating the pick-up devices 20 along the guide 16, thus avoiding loss risks for the products 4 during the transfer to station 3.

Finally, from the above, it is apparent that changes and variations may be made to the described pick-up head 1 without departing from the scope of protection of the present invention, as defined in the appended claims.

In particular, the cams 31 could be made on separate coaxial bodies held by a single rotating shaft, instead of being made on a single drum 37; and/or the actuator 38 could be replaced by another type of drum, may rotate the cams 31 without inverting the rotation, e.g. by a pneumatic rotary motor or an assembly of a linear actuator and a transmission with converts the rectilinear reciprocating motion into rotary motion; and/or the structure 10 could be different in shape; and/or the pick-up devices 26 could be connected to the slide shoes 25 in a different manner from that shown by way of example.

## Claims

1. Pick-up head (1) comprising:
- a support structure (10);
- a horizontal guide (16) held in a fixed position by said support structure (10);
- a plurality of pick-up devices (26) operable to grip and release respective products (4), arranged side-by-side and coupled in a sliding way to said horizontal guide (16);
- moving means (30) for moving said pick-up devices (26) along said horizontal guide (16) between a compacted configuration and an enlarged configuration, in which said pick-up devices (26) are positioned at different pitches; said moving means (30) comprising:
a) for each said pick-up device, a respective cam (31) and a respective follower element (32); the cams (31) being held by said support structure (10), and the follower elements (32) being coupled respectively to said pick-up devices (26);
b) at least one actuator for shifting the cams;
said cams (31) extending about an axis (35) parallel to said horizontal guide (16) and being activated by said actuator to rotate about said axis (35);
**characterised in that** each cam (31) is closed as a loop continuous over 360° about said axis (35).

2. Pick-up head according to claim 1, **characterized in that** said cams (31) are held by a single shaft or by a single drum (37), which is coupled in a rotating manner to said support structure (10) about its own axis (35).

3. Pick-up head according to claim 1 or 2, **characterized in that** said cams (31) comprise:
- respective first portions (41), which are shaped such as to move said pick-up devices (26) closer from the enlarged configuration to the compacted configuration and, at the same time, to slide the ensemble of said pick-up devices (26) axially in a direction of movement parallel to said axis (35); and
- respective second portions, which are shaped such as to space out said pick-up devices (26) from the compacted configuration to the enlarged configuration and, at the same time, to slide the ensemble of said pick-up devices (26) in the opposite direction.

4. Pick-up head according to any one of the preceding claims, **characterized in that** said pick-up devices (26) are connected to the follower elements by respective vertical rods (23) located in front of said cams (31); said follower elements (32) being defined by idle rollers rotating about respective vertical axes and being held overhanging at the bottom by respective plates (33), which are located above said cams (31) and are fixed with respect to respective said rods (23).

## Patentansprüche

1. Aufnahmekopf (1), der folgendes aufweist:
- eine Tragstruktur (10);
- eine horizontale Führung (16), die in einer fixierten Position durch die Tragstruktur (10) gehalten wird;
- eine Vielzahl von Aufnahmevorrichtungen (26), die betätigbar sind zum Greifen und Lösen jeweiliger Produkte (4), die Seite an Seite angeordnet sind und in einer gleitenden Art und Weise mit der horizontalen Führung (16) gekoppelt sind;
- Bewegungsmittel (30) zum Bewegen der Aufnahmevorrichtungen (26) entlang der horizontalen Führung (16) zwischen einer zusammengefahrenen Konfiguration und einer auseinandergefahrenen Konfiguration, in der die Aufnahmevorrichtungen (26) mit unterschiedlichen Abständen zueinander positioniert sind;
wobei die Bewegungsmittel (30) folgendes aufweisen:
a) für jede der Aufnahmevorrichtungen einen jeweiligen Nocken (31) und ein jeweiliges Folgeelement (32); wobei die Nocken (31) durch die Tragstruktur (10) gehalten werden und die Folgeelemente (32) jeweils mit den Aufnahmevorrichtungen (26) gekoppelt sind;
b) wenigstens einen Betätiger zum Verschieben der Nocken;
wobei die Nocken (31) sich um eine Achse (35) parallel zur horizontalen Führung (16) erstrecken und aktiviert werden durch einen Betätiger, um sich um die Achse (35) zu drehen; **dadurch gekennzeichnet, dass** jeder Nocken (31) als eine kontinuierliche Schleife über 360° um die Achse (35) geschlossen ist.

2. Aufnahmekopf nach Anspruch 1, **dadurch gekennzeichnet, dass** die Nocken (31) durch eine einzelne Welle oder eine einzelne Trommel (37) gehalten werden, die in einer drehbaren Art und Weise um ihre eigene Achse (35) an die Tragstruktur (10) gekoppelt ist.

3. Aufnahmekopf nach Anspruch 1 oder 2, **dadurch gekennzeichnet, dass** die Nocken (31) folgendes aufweisen:
- jeweilige erste Teile (41), die geformt sind, um die Aufnahmevorrichtungen (26) aus der auseinandergefahrenen Konfiguration zu der zusammengefahrenen Konfiguration näher zueinander zu bewegen und zur selben Zeit das Ensemble aus Aufnahmevorrichtungen (26) axial in einer Bewegungsrichtung parallel zu der Achse (35) zu verschieben; und
- jeweilige zweite Teile, die geformt sind, um die Aufnahmevorrichtungen (26) aus der zusammengefahrenen Konfiguration zu der auseinandergefahrenen Konfiguration auseinander zu bewegen und zur selben Zeit das Ensemble der Aufnahmevorrichtungen (26) in die entgegengesetzte Richtung zu verschieben.

4. Aufnahmekopf nach einem der vorhergehenden Ansprüche, **dadurch gekennzeichnet, dass** die Aufnahmevorrichtungen (26) mit den Folgeelementen durch jeweilige vertikale Stangen (23) verbunden sind, die vor den Nocken (31) angeordnet sind; wobei die Folgeelemente (32) durch Leerlaufrollen definiert sind, die sich um jeweilige vertikale Achsen drehen und die in einer überhängenden Beziehung an dem Boden gehalten werden durch jeweilige Platten (33), die oberhalb der Nocken (31) angeordnet sind und bezüglich der jeweiligen Stangen (23) fixiert sind.

## Revendications

1. Tête de préhension (1) comprenant :
- une structure de support (10) ;
- un guide horizontal (16) maintenu dans une position fixe par ladite structure de support (10) ;
- une pluralité de dispositifs de préhension (26) utilisables pour saisir et libérer des produits (4) respectifs, agencés côte à côte et couplés de façon coulissante audit guide horizontal (16) ;
- un moyen de déplacement (30) permettant de déplacer lesdits dispositifs de préhension (26) le long dudit guide horizontal (16) entre une configuration compactée et une configuration déployée, dans lesquelles lesdits dispositifs de préhension (26) sont positionnés à différents pas ; ledit moyen de déplacement (30) comprenant :
a) pour chaque dispositif de préhension, une came (31) respective et un élément suiveur (32) respectif ; les cames (31) étant maintenues par ladite structure de support (10), et les éléments suiveurs (32) étant couplés respectivement auxdits dispositifs de préhension (26) ;
b) au moins un actionneur permettant de déplacer les cames ;
lesdites cames s'étendant autour d'un axe (35) parallèle audit guide horizontal (16), et étant activées par ledit actionneur afin de tourner autour dudit axe (35) ;
**caractérisée en ce que** chaque came (31) est fermée comme une boucle continue sur 360 ° autour dudit axe (35).

2. Tête de préhension selon la revendication 1, **caractérisée en ce que** lesdites cames (31) sont maintenues par un arbre simple ou par un tambour simple (37), qui est couplé de façon rotative à ladite structure de support (10) autour de son propre axe (35).

3. Tête de préhension selon la revendication 1 ou 2, **caractérisée en ce que** lesdites cames (31) comprennent :
- des premières portions (41) respectives, qui sont formées de façon à rapprocher lesdits dispositifs de préhension (26) de la configuration déployée à la configuration compactée et, dans le même temps, afin de faire coulisser l'ensemble desdits dispositifs de préhension (26) axialement dans une direction de mouvement parallèle audit axe (35) ; et
- des secondes portions respectives, qui ont une forme permettant d'espacer lesdits dispositifs de préhension (26) de la configuration compactée à la configuration déployée et, dans le même temps, de faire coulisser l'ensemble desdits dispositifs de préhension (26) dans la direction opposée.

4. Tête de préhension selon l'une quelconque des revendications précédentes, **caractérisée en ce que** lesdits dispositifs de préhension (26) sont raccordés aux éléments suiveurs par des tiges verticales (23) respectives situées en face desdites cames (31) ; lesdits éléments suiveurs (32) étant définis par des galets libres tournant autour d'axes verticaux respectifs et étant maintenus en surplomb au fond par des plaques (33) respectives, qui sont situées au-dessus desdites cames (31) et sont fixées par rapport auxdites tiges (23) respectives.
